## Europäisches Patentamt
## European Patent Office
## Office européen des brevets

(11) Publication number: **0 152 301**
**B1**

(12) **EUROPEAN PATENT SPECIFICATION**

(45) Date of publication of patent specification: **19.04.89**

(51) Int. Cl.⁴: **G 02 B 23/00, G 02 B 23/26**

(21) Application number: **85300901.7**

(22) Date of filing: **11.02.85**

(54) **Apparatus for inspecting the interior of a vacuum vessel.**

(30) Priority: **13.02.84 JP 26452/84**
**13.02.84 JP 26453/84**
**13.02.84 JP 26454/84**

(43) Date of publication of application:
**21.08.85 Bulletin 85/34**

(45) Publication of the grant of the patent:
**19.04.89 Bulletin 89/16**

(84) Designated Contracting States:
**DE FR GB**

(56) References cited:
**DE-A-3 242 836**
**GB-A-1 179 413**

**NUCLEAR ENGINEERING INTERNATIONAL,
vol. 19, no. 222, November 1974, pages 934-
937, IPC, Haywards Heath, GB; Dr.R. SAGLIO:
"Routine PWR pressure vessel checkout"**

(73) Proprietor: **MITSUBISHI DENKI KABUSHIKI
KAISHA**
**2-3, Marunouchi 2-chome Chiyoda-ku
Tokyo 100 (JP)**

(72) Inventor: **Kojiro, Tetsuya**
**17-11, Yokoo 2-chome
Suma-ku Kobe Hyogo Prefecture (JP)**

(74) Representative: **Lawson, David Glynne et al
MARKS & CLERK 57-60 Lincoln's Inn Fields
London WC2A 3LS (GB)**

(56) References cited:
**REMOTE SYSTEMS TECHNOLOGY(PROC. OF
28th CONF.), vol. 1/2, 1980, pages 13-19, La
Grange Park, Illinois, US; J. VERTUT et al.:
"MA-23 M contained servomanipulator with
television cameras on pica and piade
telescopic supports with computerized
integrated control"**

Courier Press, Leamington Spa, England.

## Description

The present invention relates to an apparatus for inspecting the interior of a vacuum vessel so as to determine the state in the vacuum vessel, i.e., to determine the external appearance of the inner wall of the vessel, as to deformations or damage of the arbitrary structure in the vessel such as in a vacuum vessel of a nuclear fusion reactor.

To achieve such an object, an industrial television camera (hereinafter abbreviated to as "an ITV camera") is heretofore inserted into a vacuum vessel, a video signal from the ITV camera is introduced to a monitor television receiver provided outside of the vacuum vessel to display the signal on the monitor television receiver. The ITV camera is mounted at the end of a tubular structure inserted into the vessel.

A wire for driving the structure is provided to drive the position of the structure in its axial direction in the vacuum vessel, and an automatic drive unit of a camera head of the ITV camera is remotely operated outside of the structure to alter the observation visual field, but since it is difficult to alter the position of the camera head for observing in the axial direction of the structure toward the radial direction perpendicular to the axial direction, the camera head has been manually exchanged.

Since the position of the ITV camera can alter only in the axial direction of the structure, it has the disadvantage that the position of the camera relative to the object to be observed cannot be freely adjusted.

Further, the environmental temperature necessary for the normal operation of the ITV camera is 60°C or lower, while the temperature in the vacuum vessel is approx. 250°C. Accordingly, the ITV camera has the disadvantage that a large quantity of cooling gas must flow into the structure to cool the ITV camera in this case. Since light is incident from an observation window provided at the end of the structure in the ITV camera, transparent glass used in the window must endure high temperatures and the pressures in the vacuum vessel. Further, an illumination facility is provided to illuminate the interior of the vacuum vessel.

In summary, the disadvantages of the conventional apparatus require a camera cooler of a large capacity, problems arise in the durability of the ITV camera and check and maintenance of the cooler, the camera head must be exchanged in the case of observing toward the radial direction of the tubular structure and in the case of observing toward the axial direction of the structure, the safety of the work and the easiness of the maintenance decrease, and the visual field for controlling the position of the camera is limited.

The present invention has for its object to provide an apparatus for inspecting the interior of a vacuum vessel which has excellent heat resistance, is easy to maintain, and can arbitrarily alter the three-dimensional coordinate position in the vacuum vessel of the inspecting device.

More particularly, the present invention comprises an apparatus for inspecting the interior of a vacuum vessel comprising: a tubular structure connected to a port of the vacuum vessel, a rod-shaped arm body elevationally movable in a Z-axis direction in said tubular structure (in an X—Y—Z orthogonal coordinates system having the axial centre of said structure as the Z-axis), a rod-shaped arm end extending from the lower end of said arm body and constructed so that the angle formed with the Z-axis by the longitudinal axis of the arm end may be altered, an arm rotating unit for rotating said arm end about the Z-axis, a movable block capable of moving along said arm end, image forming means mounted on said block, an image guide comprising a bundle of optical fibers connected to said image forming means for transmitting the image formed by said image forming means to a predetermined position outside said vacuum vessel, and a drive unit for driving said arm body in the Z-axis direction, for alteration of the angle of said arm end relative to the Z-axis, for the rotation of said arm end around the Z-axis through said arm rotary unit, and for the movement of said movable block along the arm end.

Brief description of the drawings
Figure 1 is an explanatory view showing an embodiment of an apparatus for inspecting the interior or a vacuum vessel according to the present invention;
Figure 2 is an explanatory view showing a principle of an image guide;
Figure 3 is an explanatory view of the detail of the vicinity of an arm end of Figure 1; and
Figure 4 is an explanatory view showing the construction of a trunk support of Figure 1.
In the drawings, the same symbols indicate the same or corresponding parts.

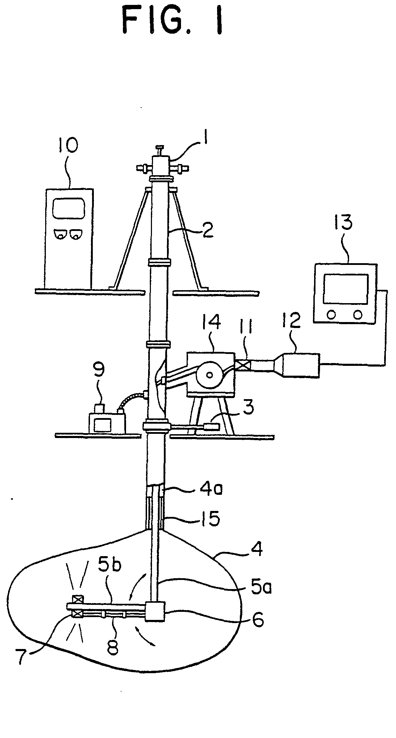

Description of the preferred embodiments
An embodiment of the present invention will be described with reference to the accompanying drawings. Figure 1 is an explanatory view showing an embodiment of the present invention. In Figure 1, numeral 1 designates a drive unit, numeral 2 a tubular structure, numeral 3 a gate valve, numeral 4 a vacuum vessel, and numeral 4a a port connected to the vessel 4. The vessel 4 communicates with or shuts off the inner atmosphere of the structure 2 by opening or closing the gate valve 3. Numeral 6 denotes an arm rotating unit, numeral 7 an observation unit, numeral 8 an image guide, numeral 9 a vacuum pump unit, numeral 10 an operation board, numeral 11 an optical connector, numeral 12 a television camera, numeral 13 a monitor television receiver, numeral 14 an image guide winding mechanism, and numeral 15 a trunk support.

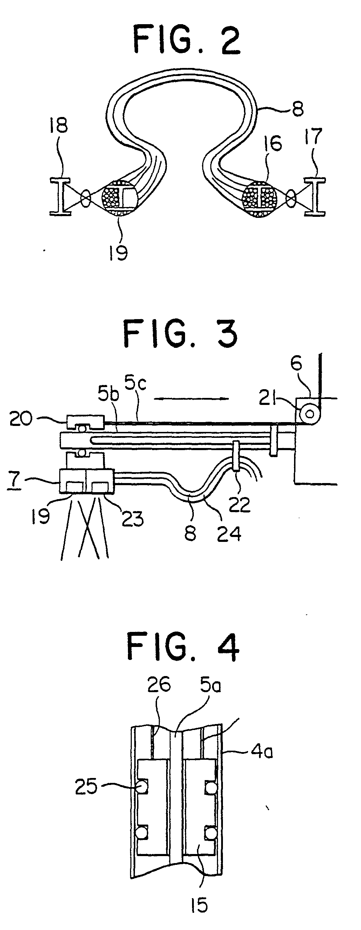

Figure 2 is an explanatory view showing a principle of the image guide 8. Numeral 16 indicates an image guide receiver, numeral 17 an image, numeral 18 an object numeral 19 an image forming device, which forms part of the observation unit 7 of Figure 1. The image guide 8 comprises, for example, several tens of thousands of ultrafine optical fibers of quartz, one end of which forms the image forming device 19 and the other end of which forms the image guide receiver 16. Light incident on the ends of the respective optical fibers of the image forming device 19 is transmitted through the image guide 8, received through the optical connector 11 by the television camera 12, and displayed on the monitor television receiver 13.

Figure 3 is an explanatory view showing in detail the vicinity of the arm end 5b of Figure 1, wherein the corresponding parts are denoted by the same symbols as those shown in Figures 1 and 2. Referring to the Figure, numeral 5c indicates a driving wire, numeral 20 indicates movable blocks, numeral 21 a pulley, numeral 22 image guide supporting rings, numeral 23 a light emitting unit, and numeral 24 a light guide, wherein the device 19, the blocks 20 and the light emitting unit 23 form the observation unit 7. In the embodiment shown in Figure 3, light from a light source is externally transmitted through the light guide 23, having the same specification as that of the image guide 8, to emit from the emitting unit 23 into the vacuum vessel 4. However, the interior of the vacuum vessel 4 may be illuminated by other methods, in which case the light guide 24 and the light emitting unit 23 may be omitted.

The drive unit 1 drives the arm body 5a in the tubular structure 2 and the port 4a in the Z-axis direction, alters the angle formed of the arm end 5b with respect to the Z-axis, rotates the arm end 5b through the arm rotating unit 6 around the Z-axis, and winds the driving wire 5c through the pulley 21, thereby moving the observation unit 7 mounted on the block 20 along the axis of the arm end 5b. When the position of the block 20 varies, the image guide supporting rings 22 enable the image guide 8 and the light guide 24 to readily elongate and contract.

The tubular structure 2 is connected to the port 4a, the drive unit 1 is controlled from the operation board 10 to execute the observation through the upward and downward movements of the arm body 5a, the rotation of the arm end 5b around the Z-axis and the positioning of the movable block 20 to thereby dispose the observation unit 7 at a predetermined position. When the block 20 moves to alter the distance of the block 20 along the arm body 5a and the arm end 5b, the image guide winding mechanism 14 winds or unwinds so as to eliminate slack in the image guide 8. Thus, the durability of the image guide is improved, and the driving characteristic of the arm is improved.

Figure 4 is an explanatory view showing the construction of the trunk support 15 of Figure 1, and the corresponding parts are denoted by the same symbols as those shown in Figure 1. Referring to the Figure, numeral 25 designates balls, and numeral 26 driving wires. The trunk support 15 has penetrating holes formed therethrough for slidably supporting the upward and downward movements of the arm body 5a in the Z-axis direction and the rotation around the Z-axis so that the axial center position of the arm body 5a is maintained at a predetermined position in the X—Y plane. The trunk support 15 also has, though not shown, a penetrating hole for slidably holding the image guide 8 (the image guide 8 and the light guide 24 in case that the light guide 24 is provided) in the upward and downward movement in the Z-axis direction.

When the trunk support 15 is driven by the drive unit 1 through the driving wires 26 in the Z-axis direction, the balls 25 rotate in contact with the inner wall of the port 4a so that the trunk support 15 can readily move in the port 4a and is fixed at a point in the port 4a, thereby providing the trunk supporting point for supporting the arm body 5a at that point.

In the embodiment described above, the durability of the image guide 8 is improved, the driving characteristic of the arm is improved by providing the image guide winding mechanism 14, and the drive of the arm body 5a and the arm end 5b as well as the winding and the unwinding of the image guide 8 can be facilitated. However, it should be noted that the image guide winding mechanism 14 and the trunk support 15 are not always necessary, but are provided as required.

In the embodiment described above, the present invention has been described with respect to the case applied to the nuclear fusion reactor. However, the apparatus of the present invention can be applied also to a light-water type nuclear reactor and a fast breeder.

As set forth above, according to the present invention, since the apparatus comprises an image guide instead of the conventional ITV camera and the arm driving system is constructed to be able to dispose the image guide sensor at any arbitrary position in the vacuum vessel, an inspecting apparatus which has excellent heat resistance, a large observing range and is easy to maintain is provided.

## Claims

1. An apparatus for inspecting the interior of a vacuum vessel (4) comprising:

a tubular structure (2) connected to a port (4a) of the vacuum vessel.

a rod-shaped arm body (5a) elevationally movable in a Z-axis direction in said tubular structure (in an X—Y—Z orthogonal coordinates system having the axial centre of said structure as the Z-axis),

a rod-shaped arm end (5b) extending from the lower end of said arm body and constructed so that the angle formed with the Z-axis by the longitudinal axis of the arm end (5b) may be altered.

an arm rotating unit (6) for rotating said arm end about the Z-axis,

a movable block (20) capable of moving along said arm end,

image forming means (19) mounted on said block, an image guide (8) comprising a bundle of optical fibers connected to said image forming means for transmitting the image formed by said image forming means to a predetermined position outside said vacuum vessel, and

a drive unit (1) for driving said arm body (5a) in the Z-axis direction, for alteration of the angle of said arm end (5b) relative to the Z-axis, for the rotation of said arm end around the Z-axis through said arm rotary unit (6), and for the movement of said movable block (20) along the arm end.

2. Apparatus as claimed in Claim 1 characterised by an optical connector (11) for optically coupling said image guide at the predetermined position of said tubular structure.

3. An apparatus as defined in Claim 2, characterised in that an image guide winding mechanism (14) for introducing said image guide through said tubular structure and winding or unwinding said image guide upon movement of said movable block (20) is provided between said structure and said optical connector (11).

4. An apparatus as defined in Claim 1, 2 or 3 characterised in that a trunk support (15) constructed to move freely in the port and to be fixed at least at a point in said port and having penetrating holes, formed therethrough, through which said arm body and said image guide are respectively supported to slidably move in the Z-axis direction, is provided in said tubular structure.

5. Apparatus as claimed in any preceding claim characterised in that a light guide (24) is connected to a light emitting unit (23) mounted on a said block (20) for illuminating the region viewed by the image forming means (19).

6. Apparatus as claimed in any preceding claim characterised in that guide supporting rings (22) for slidably supporting the image guide (8) and the light guide (24) if provided, are provided on the said arm end (5b).

7. Apparatus as claimed in any preceding claim characterised in that the tubular structure (2) can be connected to or disconnected from the vacuum vessel (4) through a gate valve (3), and a vacuum pump unit (9) is provided for evacuating the vacuum vessel when the tubular structure is connected to the vessel.

8. Apparatus as claimed in any preceding claim characterised in that the vacuum vessel (4) is the vacuum vessel of a nuclear fusion reactor.

**Patentansprüche**

1. Vorrichtung zum Inspizieren des Innenraumes eines Vakuumbehälters (4), umfassend:—

eine rohrförmige Anordnung (2), die mit einer Öffnung (4a) des Vakuumbehälters verbunden ist,

einen stangenförmigen Armkörper (5a), der in der rohrförmigen Anordnung in Z-Achsenrichtung in einem orthogonalen X—Y—Z-Koordinatensystem, das als Achsenzentrum der Anordnung die Z-Achse hat, anhebbar beweglich ist,

ein stangenförmiges Armende (5b), das sich von dem unteren Ende des Armkörpers aus erstrekt und so gebaut ist, daß der Winkel, der von der Längsachse des Armendes (5b) mit der Z-Achse gebildet wird, geändert werden kann,

eine Armdreheinheit (6), um das Armende um die Z-Achse zu drehen,

einen beweglichen Block (20), der sich längs des Armendes bewegen kann,

eine Bilderzeugungseinrichtung (19), die an dem Block montiert ist, wobei ein Bildleiter (8), der ein Bündel von optischen Fasern aufweist, mit der Bilderzeugungseinrichtung verbunden ist, um das von der Bilderzeugungseinrichtung gebildete Bild zu einem vorgegebenen Ort außerhalb des Vakuumbehälters zu übertragen, und

eine Antriebseinheit (1), um dem Armkörper (5a) in der Richtung der Z-Achse anzutreiben, um den Winkel des Armendes (5b) relativ zur Z-Achse zu ändern, um das Armende um die Z-Achse durch die Armdreheinheit (6) zu drehen, und um den beweglichen Block (20) längs des Armendes zu bewegen.

2. Vorrichtung nach Anspruch 1, gekennzeichnet, durch einen optischen Verbinder (11), um den Bildleiter an dem vorgegebenen Ort der rohrförmigen Anordnung optisch anzuschließen.

3. Vorrichtung nach Anspruch 2, dadurch gekennzeichnet, daß ein Bildleiter-Wickelmechanismus (14) zwischen der Anordnung und dem optischen Verbinder (11) vorgesehen ist, um den Bildleiter durch die rohrförmige Anordnung einzuführen und den Bildleiter bei der Bewegung des beweglichen Blockes (20) aufzuwickeln oder abzuwickeln.

4. Vorrichtung nach Anspruch 1, 2 oder 3, dadurch gekennzeichnet, daß in der rohrförmigen Anordnung eine Schaftabstützung (15) vorgesehen ist, die so aufgebaut ist, daß sie sich in der Öffnung frei bewegt und an mindestens einer Stelle in der Öffnung zu befestigen ist und in ihr ausgebildete Durchgangslöcher hat, durch welche der Armkörper und der Bildleiter jeweils gelagert sind, um sich in der Richtung der Z-Achse gleitend zu bewegen.

5. Vorrichtung nach einem der vorherigen Ansprüche, dadurch gekennzeichnet, daß ein Lichtleiter (24) an eine Licht emitteriende Einheit (23) angeschlossen ist, die an dem Block (20) montiert ist, um den Bereich zu bleuchten, der mit der Bilderzeugungseinrichtung (19) betrachtet wird.

6. Vorrichtung nach einem der vorherigen Ansprüche, dadurch gekennzeichnet, daß Leiterstützringe (22) zur gleitenden Halterung des Bildleiters (8) und gegebenenfalls des Lichtleiters (24) an dem Armende (5b) vorgesehen sind.

7. Vorrichtung nach einem der vorherigen Ansprüche, dadurch gekennzeichnet, daß die rohrförmige Anordnung (2) über ein Absperrventil (3) an den Vakuumbehälter (4) angeschlossen oder von diesem abgetrennt werden kann und daß eine Vakuumpumpeneinheit (9) vorgesehen ist, um den Vakuumbehälter zu evakuieren, wenn die rohrförmige Anordnung an den Behälter angeschlossen ist.

8. Vorrichtung nach einem der vorherigen Ansprüche, dadurch gekennzeichnet, daß der Vakuumbehälter (4) der Vakuumbehälter eines Kernschmelzreaktors ist.

## Revendications

1. Un appareil pour inspecter l'intérieur d'un réservoir sous vide (4) comprenant:

une structure tubulaire (2) reliée à un conduit (4a) du réservoir sous vide,

un corps de bras en forme de tige (5a) déplaçable en élévation dans une direction d'un axe Z dans ladite structure tubulaire (dans un système de coordonnées orthogonales X—Y—Z ayant le centre axial de ladite structure en tant qu'axe Z),

une extrémité de bras en forme de tige (5b) s'étendant de l'extrémité inférieure dudit corps de bras et construite de sorte que l'angle formé avec l'axe Z par l'axe longitudinal de l'extrémité de bras (5b) puisse être modifié,

une unité de rotation de bras (6) pour faire pivoter ladite extrémité de bras autour de l'axe Z,

un chariot déplaçable (20) susceptible de se déplacer le long de ladite extrémité de bras,

un moyen de formation d'image (19) monté sur ledit chariot, un guide d'image (8) comprenant un faisceau de fibres optiques relié audit moyen de formation d'image pour transmettre l'image formée par ledit moyen de formation d'image vers une position prédéterminée extérieure audit réservoir sous vide, et

une unité d'entraînement (1) pour entraîner ledit corps de bras (5a) dans la direction de l'axe Z, pour la modification de l'angle de ladite extrémité de bras (5b) pour rapport à l'axe Z, pour la rotation de ladite extrémité de bras autour de l'axe Z par l'intermédiaire de ladite unité de rotation du bras (6), et pour le mouvement dudit chariot déplaçable (20) le long de l'extrémité de bras.

2. Appareil selon la revendication 1, caractérisé par un connecteur optique (11) pour relier de façon optique ledit guide d'image à la position prédéterminée de ladite structure tubulaire.

3. Un appareil selon la revendication 2, caractérisé en ce qu'un mécanisme (14) d'enroulement du guide d'image pour introduire ledit guide d'image au travers de ladite structure tubulaire et pour enrouler et dérouler ledit guide d'image lors du mouvement dudit chariot déplaçable (20) est prévu entre ladite structure et ledit connecteur optique (11).

4. Un appareil selon la revendication 1, 2 ou 3, caractérisé en ce qu'un fourreau-support (15) construit pour se déplacer librement dans le conduit et pour être fixé à au moins un point dans ledit conduit et avoir des orifices débouchants, formés au travers de celui-ci, par l'intermédiaire duquel ledit corps de bras et ledit guide d'image sont respectivement supportés pour se déplacer de façon coulissante dans la direction de l'axe Z, est prévu dans ladite structure tubulaire.

5. Appareil selon l'une quelconque des revendications précédentes, caractérisé en ce qu'un guide d'image (24) est relié à l'unité d'émission de lumière (23) montée sur ledit chariot (20) pour illuminer la région vue par le moyen de formation d'image (19).

6. Appareil selon l'une quelconque des revendications précédentes, caractérisé en ce que des bagues de support de guide (22) pour supporter de façon coulissante le guide d'image (8) et le guide de lumière (24) si prévu, sont prévues sur ladite extrémité de bras (5b).

7. Appareil selon l'une quelconque des revendications précédentes, caractérisé en ce que la structure tubulaire (2) peut être reliée au, ou déconnectée du, réservoir sous vide (4) par l'intermédiare d'une vanne de passage (3), et en ce qu'une unité formant pompe à vide (9) est prévue pour faire le vide dans le réservoir sous vide quand la structure tubulaire est reliée au réservoir.

8. Appareil selon l'une quelconque des revendications précédentes, caractérisé en ce que le réservoir sous vide (4) est le réservoir sous vide d'un réacteur de fusion nucléaire.

# FIG. 1

# FIG. 2

# FIG. 3

# FIG. 4